Europäisches Patentamt

European Patent Office

Office européen des brevets

(19)

(11) Numéro de publication : **0 312 459 B1**

(12) **FASCICULE DE BREVET EUROPEEN**

(45) Date de publication du fascicule du brevet :
**11.03.92 Bulletin 92/11**

(51) Int. Cl.⁵ : **C09D 123/00,** C08F 210/02,
// (C08F210/02, 222:04)

(21) Numéro de dépôt : **88402596.6**

(22) Date de dépôt : **13.10.88**

(54) **Polymères fonctionnalisés de l'éthylène applicables à l'enduction d'un métal et un procédé pour leur préparation.**

(30) Priorité : **14.10.87 FR 8714183**

(43) Date de publication de la demande :
**19.04.89 Bulletin 89/16**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**EP-A- 0 065 450**
**CHEMICAL ABSTRACTS, vol. 98, 1983, page
92, résumé no. 109051, Columbus, Ohio, US; &
SU-A-975 724 (V.I. IVANOV et al.) 23-11-1982**

(73) Titulaire : **ATOCHEM
4 & 8, Cours Michelet La Défense 10
F-92800 Puteaux (FR)**

(72) Inventeur : **Hert, Marius
13 Avenue Lepercq
F-60550 Verneuil en Halatte (FR)**
Inventeur : **Labatut, Brigitte
123, rue Etienne Flament
F-62300 Lens (FR)**
Inventeur : **Lebez, Jean
Résidence Bollaert Bat.B - Appart.72
F-62300 Lens (FR)**

(74) Mandataire : **Rochet, Michel et al
ATOCHEM Département Propriété Industrielle
4, Cours Michelet La Défense 10 Cedex 42
F-92091 Paris-La-Défense (FR)**

## Description

La présente invention concerne des polymères fonctionnalisés de l'éthylène applicables à l'enduction d'un métal et un procédé pour leur préparation.

On connaît déjà par le document FR-A-2.498.609 des polymères comprenant de 87 à 98,7 % en moles de motifs dérivés de l'éthylène, de 1 à 10 % en moles de motifs dérivés d'un (méth)acrylate d'alkyle dont le groupe alkyle a de 1 à 6 atomes de carbone et de 0,3 à 3 % en moles de motifs dérivés de l'anhydride maléïque. Conformément au document FR-A-2.505.859 ces polymères sont applicables, lorsque leur indice de fluidité est compris entre 2 et 10 dg/min., à l'enduction d'un métal sous la forme d'un film d'épaisseur comprise entre 10 et 500 μm. On obtient ainsi des matériaux résistant bien au pelage. Cependant ils présentent lors de cette opération un phénomène de retrait en largeur assez important qui rend difficile la conduite de la machine d'enduction. Le retrait en largeur est défini comme le rapport entre la différence (largeur de la filière - largeur du film) et la largeur de la filière.

Le problème que la présente invention se propose de résoudre consiste à mettre au point des polymères capables, dans l'application à l'enduction d'un métal, de procurer une résistance au pelage satisfaisante tout en diminuant le phénomène de retrait en largeur.

La présente invention a pour premier objet des polymères d'indice de fluidité compris entre 1 et 20 dg/min. comprenant des motifs (A) dérivés de l'éthylène, des motifs (B) dérivés d'un anhydride d'acide α,β-dicarboxylique éthyléniquement insaturé et le cas échéant des motifs (C) dérivés d'un acrylate ou méthacrylate d'alkyle dont le groupe alkyle contient de 1 à 12 atomes de carbone, caractérisés en ce que, pour 100 moles, ils comprennent : de 83 à 99,7 moles de motifs (A), de 0,29 à 3 moles de motifs (B), de 0 à 13,6 moles de motifs (C) et en outre de 0,01 à 0,4 moles de motifs (D) dérivés d'au moins un poly(méth)acrylate de polyol.

L'indice de fluidité des polymères selon l'invention est déterminé selon la norme ASTM D-1238 à 190°C sous une charge de 2,16 kg. Il est de préférence compris entre 1 et 8 dg/min. Leur point de fusion cristalline est généralement compris entre 70 et 110°C et leur température de ramollissement Vicat est généralement comprise entre 40 et 90°C environ. Les points de fusion cristalline et les température de ramollissement Vicat sont d'autant plus bas que la teneur en motifs (C) est plus élevée.

Les polymères selon l'invention présentent généralement une masse moléculaire moyenne en poids de 50.000 à 150.000 et/ou un indice de polydispersité (défini comme le rapport de la masse moléculaire moyenne en poids à la masse moléculaire moyenne en nombre) compris entre 5 et 12 environ.

Les polymères selon l'invention ont, de préférence, une teneur non nulle en motifs (C). La présence de motifs dérivés d'un acrylate ou méthacrylate d'alkyle permet de diminuer le taux de cristallinité du polymère obtenu et de faciliter la soudure des films qui le contiennent. Avantageusement les polymères selon l'invention comprennent alors, pour 100 moles : de 83 à 98,7 moles de motifs (A), de 0,29 à 3 moles de motifs (B), de 1 à 13,6 moles de motifs (C) et de 0,01 à 0,4 moles de motifs (D).

Par poly(méth)acrylate de polyol entrant dans la constitution des polymères selon l'invention on entend tout composé dérivant d'un polyol et comprenant au moins deux fonctions esters obtenues par estérification au moins partielle dudit polyol au moyen d'acide acrylique ou méthacrylique. Il peut s'agir d'un di(méth)acrylate de diol, triol, tétrol, etc., d'un tri(méth)acrylate de triol, tétrol, etc., d'un tétra(méth)acrylate d'un polyol ayant au moins 4 fonctions alcool. On peut citer les diacrylates et diméthacrylates de l'éthylèneglycol, du propylèneglycol, du 1,3-butanediol, du 1,4-butanediol, du 1,6-hexanediol, du néopentylglycol, du 1,4-cyclohexanediol, du 1,4-cyclohexanediméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylèneglycol, du tétrapropylèneglycol, du triméthyloléthane, du triméthylolpropane, du glycérol, du pentaérythritol, les triacrylates et triméthacrylates du triméthyloléthane, du triméthylolpropane, du glycérol, du pentaérythritol, les tétracrylates et tétraméthacrylates du pentaérythritol, les di(méth)acrylates à hexa(méth)acrylates du dipentaérythritol, les poly(méth)acrylates de polyols mono- ou polyéthoxylés ou mono- ou polypropoxylés tels le triacrylate et le triméthacrylate du triméthylolpropanetriéthoxylé, du triméthylolpropane tripropoxylé ; le triacrylate et le triméthacrylate du glycérol tripropoxylé ; le triacrylate, le triméthacrylate, le tétraacrylate et le tétraméthacrylate du pentaérythritol tétraéthoxylé.

Le (méth)acrylate d'alkyle pouvant, le cas échéant, entrer dans la constitution des polymères selon l'invention est notamment choisi parmi les acrylates et méthacrylates de méthyle, d'éthyle, de n-propyle, d'iso-propyle, de n-butyle, d'iso-butyle, de n-pentyle, de n-hexyle, d'éthyl-2-hexyle, de n-octyle, de 3,5,5-triméthylhexyle, de n-décyle, de cyclohexyle. L'anhydride d'acide α,β-dicarboxylique éthyléniquement insaturé peut être notamment l'anhydride maléique, l'anhydride citraconique, l'anhydride itaconique et leurs homologues supérieurs alkylés.

La présente invention a pour deuxième objet un procédé de préparation des polymères définis ci-dessus par copolymérisation d'éthylène, d'anhydride d'acide α,β-dicarboxylique éthyléniquement insaturé, d'au moins

2

un poly(méth)acrylate de polyol et, le cas échéant, d'au moins un (méth)acrylate d'alkyle, à une température T comprise entre 140 et 280°C environ, sous une pression P comprise entre 1000 et 2500 bars environ, en présence d'au moins un initiateur de radicaux libres, caractérisé en ce que, préalablement à la copolymérisation, le poly(méth)acrylate de polyol est dissous dans un solvant. Le procédé peut être mis en oeuvre selon un mode discontinu ou, avantageusement, selon un mode continu. Dans ce dernier cas le mélange soumis à la copolymérisation, entrant dans le réacteur de polymérisation, est composé, en régime stationnaire, de 97,8 à 99,97 (de préférence de 97,8 à 99,87) % en moles d'éthylène, de 0,029 à 0,35 % en moles d'anhydride d'acide $\alpha,\beta$-dicarboxylique insaturé, de 0 à 1,8 (de préférence de 0,1 à 1,8) % en moles de (méth)acrylate d'alkyle et de 0,001 à 0,05 % en moles de poly(méth)acrylate de polyol. Le solvant utilisé peut être un solvant inerte (c'est-à-dire quine copolymérise pas dans les conditions de mise en oeuvre du procédé selon l'invention) ayant une constante de transfert négligeable vis-à-vis de l'éthylène et ayant un point d'ébullition compris entre 100 et 250°C. Des exemples de tels solvants sont le carbonate de propylène, le diméthylformamide, etc. Le solvant utilisé peut également être, notamment dans le cas où le polymère obtenu contient des motifs dérivés d'au moins un (méth)acrylate d'alkyle, le(méth)acrylate d'alkyle lui-même. Dans ces solvants, inertes ou non, le poly(méth)acrylate de polyol est soluble en toutes proportions ; on utilise avantageusement des solutions à une concentration de 50 à 500 g/l. La solution de poly(méth)acrylate de polyol peut être introduite directement dans le réacteur de polymérisation, c'est-à-dire indépendamment du flux d'éthylène.

Lorsque le procédé est mis en oeuvre dans une installation comprenant un compresseur primaire d'éthylène ayant une pression de refoulement $P_1 < P$ (par exemple comprise entre 200 et 300 bars), relié à un compresseur secondaire relié directement au réacteur de polymérisation, la solution de poly(méth)acrylate de polyol est avantageusement introduite à l'aspiration du compresseur secondaire.

Selon une variante de procédé selon l'invention, l'anhydride d'acide $\alpha,\beta$-dicarboxylique insaturé est également dissous, avantageusement à une concentration de 50 à 500 g/l, dans un solvant tel que défini précédemment. Les solutions de poly(méth)acrylate de polyol et d'anhydride d'acide $\alpha,\beta$-dicarboxylique insaturé peuvent être introduites directement dans le réacteur de polymérisation ou à l'aspiration du compresseur secondaire ou bien l'une dans le réacteur et l'autre à l'aspiration du compresseur secondaire.

Selon une variante avantageuse du procédé selon l'invention, le poly(méth)acrylate de polyol et l'anhydride d'acide $\alpha,\beta$-dicarboxylique insaturé sont dissous dans le même solvant pour former une solution unique introduite soit directement dans le réacteur de polymérisation soit à l'aspiration du compresseur secondaire.

Le réacteur de polymérisation utilisable pour le mise en oeuvre du procédé en mode continu selon l'invention peut être de type tubulaire ou autoclave et peut comprendre une ou plusieurs zones. Généralement le fond du réacteur est muni d'une vanne de détente permettant d'abaisser la pression par exemple jusqu'à environ 250 bars. Le mélange du polymère obtenu fondu et des monomères non consommés traverse ladite vanne de détente et est envoyé dans un séparateur fonctionnant sous moyenne pression. Le polymère est recueilli au fond dudit séparateur tandis que les monomères non consommés sont recyclés, après refroidissement, à l'aspiration du compresseur secondaire. Le fond du séparateur moyenne pression peut être muni d'une vanne de détente reliée à une trémie basse pression au fond de laquelle on recueille le polymère, les gaz provenant de la trémie basse pression étant recyclés à l'aspiration du compresseur primaire. Comme mentionné plus haut, le compresseur secondaire est relié directement au réacteur de polymérisation ; sa pression de refoulement est donc égale à celle du réacteur, aux pertes de charge près.

Les initiateurs de radicaux libres utilisables selon l'invention sont les initiateurs utilisés de façon classique dans de tels procédés de polymérisation sous haute pression, tels par exemple les peroxydes, peresters et hydroperoxydes. On peut ainsi utiliser : le peroxydicarbonate de 2-éthylhexyle, le perbenzoate de tertiobutyle, l'éthyl-2 perhexanoate de tertiobutyle, les peroxydes de ditertiobutyle, d'isopropanoyle, de 3,5,5-triméthylhexanoyle.

On peut utiliser simultanément plusieurs initiateurs dans une même zone du réacteur. Le choix du ou des initiateurs est fonction de la température de polymérisation.

On peut également réaliser la copolymérisation en introduisant dans le mélange réactionnel un agent de transfert à une teneur par exemple comprise entre 0,01 et 0,2 % en volume de façon à contrôler la masse moléculaire et l'indice de fluidité du polymère obtenu. De tels agents de transfert sont par exemple l'hydrogène, les alcanes, tels le propane et butane, les $\alpha$-oléfines telles que notamment le propène et le butène-1, les aldéhydes, les cétones.

Un troisième objet de la présente invention concerne un matériau complexe comprenant au moins une couche de métal enduite d'au moins une couche de film de polymère tel que décrit ci-dessus et d'épaisseur comprise entre 5 et 500 $\mu$m.

La couche de film de polymère peut être en outre revêtue d'au moins une couche de film de résine thermoplastique, telle que du polyéthylène, d'épaisseur généralement comprise entre 0,05 et 5 mm, qui constitue alors la couche externe du matériau complexe. Cette couche externe procure une protection élevée contre les dommages mécaniques et la pénétration de l'humidité.

Pour certaines utilisations particulières, le matériau complexe peut comprendre, entre la couche de métal et la couche de film de polymère une couche de résine destinée à améliorer l'accrochage, comprenant par exemple une résine thermodurcissable telle qu'une résine époxyde. La résine époxyde, solide ou liquide à température ambiante, est alors mélangée avec un durcisseur, tel que par exemple anhydride ou polyaminoamide, et le cas échéant, un catalyseur de réticulation et appliquée à l'état liquide sur la couche de métal à revêtir, selon une épaisseur avantageusement comprise entre 10 et 200 μm.

Le procédé d'obtention dudit matériau complexe comprend l'enduction du film de polymère sur un support métallique, comportant le cas échéant une couche de résine améliorant l'accrochage, à une température comprise entre 140° et 330°C, la vitesse de défilement dudit support métallique étant comprise entre 1 et 400 mètres par minute. Le métal est par exemple l'aluminium (dans ce cas la vitesse de défilement est avantageusement comprise entre 40 et 400 mètres par minute) ou bien l'acier (dans le cas de tubes d'acier la vitesse de défilement est généralement de 1 à 10 mètres par minute). Le support métallique est sous forme de plaque, de feuille ou de tube et a une épaisseur d'au moins 25 μm. L'enduction est réalisée avantageusement au moyen d'une filière plate. Lorsque le matériau complexe comporte, comme couche externe, une couche de film de résine thermoplastique, celle-ci est avantageusement formée par co-enduction au moyen d'une seconde filière plate placée en retrait de la première. La présence, dans les polymères selon l'invention, de motifs dérivés de poly(méth)acrylate de polyol permet de réduire significativement le retrait en largeur (tel que défini précédemment) du film enduit.

La présente invention sera maintenant illustrée au moyen des exemples non limitatifs suivants.

## I - Préparation des polymères

On considère une installation de polymérisation comprenant en série un compresseur primaire, un compresseur secondaire, un réacteur, un séparateur, une trémie de dégazage et une extrudeuse d'où le polymère formé est introduit dans un appareil de granulation, les gaz provenant du séparateur étant recyclés vers l'aspiration du compresseur secondaire et ceux provenant de la trémie vers l'aspiration du compresseur primaire. Dans cette installation on réalise la copolymérisation, sous la pression P (exprimée en bars) et à la température T (exprimée en °C) spécifiées au tableau I, et en présence de 0,03 % en poids de peroxyde de 3,5,5-triméthylhexanoyle, et des quantités, exprimées en % en volume dans le tableau I, de butène-1 (Bu) comme agent de transfert, d'éthylène (A), d'anhydride maléïque (B), de (méth)acrylate d'alkyle (C) et de poly(méth)acrylate de polyol (D) dans les proportions (parties en poids) indiquées au tableau I ci-après.

### Exemple 1 (comparatif)

Comme composé (C) on a utilisé l'acrylate d'éthyle. L'anhydride maléïque a été dissous, à raison de 250 g/l, dans l'acrylate d'éthyle et la solution a été introduite directement dans le réacteur.

### Exemple 2

On a utilisé, en tant que composé (D), le triacrylate du triméthylolpropane dissous à raison de 100 g/l dans le carbonate de propylène et introduit directement dans le réacteur. Comme composé (C) on a utilisé l'acrylate de méthyle, introduit à l'aspiration du compresseur secondaire. L'anhydride maléïque, dissous à raison de 300 g/l dans le carbonate de propylène a été introduit directement dans le réacteur.

### Exemple 3

On a utilisé, en tant que composé (D), le triacrylate du triméthylolpropane dissous à raison de 100 g/l, avec l'anhydride maléïque à raison de 280 g/l, dans l'acrylate d'éthyle. La solution a été introduite directement dans le réacteur.

### Exemple 4

On a utilisé, en tant que composé (D), le diacrylate du tripropylèneglycol dissous à raison de 100 g/l, avec l'anhydride maléïque à raison de 280 g/l, dans l'acrylate d'éthyle. La solution a été introduite directement dans le réacteur.

**Exemple 5**

On a utilisé, en tant que composé (D), le triacrylate du triméthylolpropane dissous, avec l'anhydride maléïque, dans l'acrylate de n-butyle selon les mêmes concentrations qu'à l'exemple 4. La solution a été introduite directement dans le réacteur.

**Exemple 6 (comparatif)**

Comme composé (C) on a utilisé l'acrylate de n-butyle. L'anhydride maléïque a été dissous, à raison de 250 g/l dans ledit acrylate et la solution a été introduite directement dans le réacteur.

**Exemple 7 (comparatif)**

Comme composé (C) on a utilisé l'acrylate d'éthyle. L'anhydride maléique a été dissous, à raison de 315 g/l dans ledit acrylate et la solution a été introduit directement dans le réacteur.

**Exemple 8**

Dans une solution contenant 400 g/l d'anhydride maléique dans l'acrylate d'éthyle on a ajouté, en tant que composé (D), le triacrylate du triméthylolpropane à raison de 6 % en poids. La solution a été introduite directement dans le réacteur.

### TABLEAU I

| Exemple | (A) | (B) | (C) | (D) | Bu | P | T |
|---------|-----|------|------|------|------|------|-----|
| 1 | 130 | 0,34 | 0,87 | 0,00 | 0,02 | 1650 | 200 |
| 2 | 120 | 0,38 | 1,20 | 0,10 | 0,02 | 1800 | 200 |
| 3 | 120 | 0,32 | 0,96 | 0,10 | 0,02 | 1450 | 200 |
| 4 | 120 | 0,34 | 0,90 | 0,06 | 0,01 | 1450 | 200 |
| 5 | 100 | 0,45 | 0,75 | 0,15 | 0,02 | 1600 | 210 |
| 6 | 100 | 0,45 | 0,75 | 0,00 | 0,02 | 1950 | 210 |
| 7 | 100 | 0,38 | 0,84 | 0,00 | 0 | 2000 | 200 |
| 8 | 100 | 0,62 | 0,86 | 0,10 | 0 | 1800 | 200 |

**II - Caractéristiques des polymères obtenus**

Les teneurs molaires en motifs (A), (B), (C) et (D) ainsi que les grandeurs suivantes, figurent aux tableaux II et III.

– IF : indice de fluidité mesuré selon la norme ASTM D-1238 à 190°C sous une charge de 2,16 kg et exprimé en dg/min.

– $F_c$ : point de fusion cristalline mesuré par analyse enthalpique différentielle et exprimé en °C,

– V : température de ramollissement Vicat mesurée selon la norme ASTM D-1525 et exprimée en °C,

– Mw : masse moléculaire moyenne en poids,

– Mw/Mn : indice de polydispersité.

– FT : force de tirage (exprimée en gf) à une vitesse de tirage de 3,14 m/min.

– FR : force de rupture (exprimée en gf), obtenue en augmentant de manière continue la vitesse de tirage.

La force de tirage et la foce de rupture sont déterminées à 190°C au moyen d'un rhéomètre élongationnel TOYOSEIKI.

Les masses moléculaires moyennes sont mesurées par chromatographie par perméation de gel.

Les pourcentages molaires des différentes motifs constitutifs des polymères sont mesurés par spectroscopie infrarouge, à l'exception des motifs (D) déterminés par résonance magnétique nucléaire du proton.

## TABLEAU II

| Exemple | (A) | (B) | (C) | (D) | IF | $F_c$ | V | Mw | $\frac{Mw}{Mn}$ |
|---------|-----|-----|-----|-----|-----|-------|-----|---------|--------|
| 1 | 96,62 | 0,88 | 2,50 | 0,00 | 6,4 | 104 | 78 | 84.000 | 6,5 |
| 2 | 96,39 | 0,88 | 2,70 | 0,03 | 3,4 | 104 | 75 | 92.000 | 9,0 |
| 3 | 96,44 | 0,88 | 2,60 | 0,08 | 6,3 | 104 | 75 | 93.000 | 11,3 |
| 4 | 96,42 | 0,94 | 2,60 | 0,04 | 4,4 | 104 | 75 | 105.000 | 11,4 |
| 5 | 97,62 | 1,00 | 1,30 | 0,08 | 7 | 107 | 85 | 86.000 | 5,3 |
| 6 | 97,18 | 1,06 | 1,75 | 0,00 | 7 | 107 | 82 | 82.000 | 4,5 |
| 7 | 97,69 | 0,94 | 1,36 | 0,00 | 1,1 | 109 | 87 | 99.000 | 5,1 |
| 8 | 97,33 | 1,23 | 1,30 | 0,13 | 1,3 | 110 | 86 | 139.000 | 9,1 |

## III - Application à l'enduction d'aluminium

Les polymères sont fondus à 280°C et extrudés au moyen d'une filière plate de 500 mm de largeur et 0,6 mm d'entrefer. On enduit, avec une vitesse de tirage de 100 m/min., une feuille d'aluminium de 37 μm d'épaisseur de façon à la recouvrir au moyen de 35 g de polymère par m².

Les valeurs de retrait en largeur (défini précédemment et exprimé en %) figurent au Tableau III ci-après.

## TABLEAU III

| Exemple | 1 | 2 | 3 | 4 | 5 | 6 |
|---------|-----|------|-----|-----|-----|-----|
| FT | 2,2 | 6,75 | 3,4 | 4,6 | 1,7 | 1,2 |
| FR | 2,6 | 6,4 | 3,9 | 5,0 | 2,5 | 2,0 |
| Retrait | 20 | nd | 16 | 16 | 16 | 24 |

nd : non déterminé

## Revendications

1. Polymères d'indice de fluidité compris entre 1 et 20 dg/min. comprenant des motifs (A) dérivés de l'éthylène, des motifs (B) dérivés d'un anhydride d'acide α,β-dicarboxylique éthyléniquement insaturé et le cas échéant des motifs (C) dérivés d'un acrylate ou méthacrylate d'alkyle dont le groupe alkyle contient de 1 à 12 atomes de carbone, caractérisés en ce que, pour 100 moles, ils comprennent : de 83 à 99,7 moles de motifs (A), de 0,29 à 3 moles de motifs (B), de 0 à 13,6 moles de motifs (C), et en outre de 0,01 à 0,4 moles de motifs (D) dérivés d'au moins un poly(méth)acrylate de polyol.

2. Polymères selon la revendication 1, caractérisés en ce qu'ils comprennent, pour 100 moles : de 83 à 98,7 moles de motifs (A), de 0,29 à 3 moles de motifs (B), de 1 à 13,6 moles de motifs (C) et de 0,01 à 0,4 moles de motifs (D).

3. Polymères selon l'une des revendications 1 et 2, caractérisés en ce que le poly(méth)acrylate de polyol est le triacrylate du triméthylolpropane.

4. Polymères selon l'une des revendications 1 et 2, caractérisés en ce que le poly(méth)acrylate de polyol est le diacrylate du tripropylèneglycol.

5. Polymères selon l'une des revendications 1 à 4, caractérisés en ce que leur indice de fluidité est comprise entre 1 et 8 dg/min.

6. Polymères selon l'une des revendications 1 à 5, caractérisés en ce que leur indice de polydispersité est compris entre 5 et 12.

7. Procédé de préparation d'un polymère conforme à l'une des revendications 1 à 6, par copolymérisation d'un mélange d'éthylène, d'anhydride d'acide $\alpha,\beta$-dicarboxylique éthyléniquement insaturé, d'au moins un poly(méth)acrylate de polyol et, le cas échéant, d'au moins un (méth)acrylate d'alkyle, à une température comprise entre 140 et 280°C, sous une pression comprise entre 1000 et 2500 bars, en présence d'au moins un initiateur de radicaux libres, caractérisé en ce que, préalablement à la copolymérisation, le poly(méth)acrylate de polyol est dissous dans un solvant.

8. Procédé selon la revendication 7, mis en oeuvre selon un mode continu, caractérisé en ce que le mélange est composé, en régime stationnaire, de :

– 97,8 à 99,97 % en moles d'éthylène,
– 0,029 à 0,35 % en moles d'anhydride d'acide $\alpha,\beta$-dicarboxylique insaturé,
– 0 à 1,8 % en moles de (méth)acrylate d'alkyle, et
– 0,001 à 0,05 % en moles de poly(méth)acrylate de polyol.

9. Procédé selon l'une des revendications 7 et 8, le copolymère contenant des motifs dérivés d'au moins un (méth)acrylate d'alkyle, caractérisé en ce que le poly(méth)acrylate de polyol est dissous dans ledit (méth)acrylate d'alkyle.

10. Procédé selon l'une des revendications 7 à 9, caractérisé en ce que le poly(méth)acrylate de polyol et l'anhydride d'acide $\alpha,\beta$-dicarboxylique éthyléniquement insaturé sont dissous dans le même solvant.

11. Matériau complexe comprenant au moins une couche de métal enduit d'au moins une couche de film de polymère d'épaisseur comprise entre 5 et 500 μm, caractérisé en ce que le polymère est conforme à l'une des revendications 1 à 6.

12. Matériau complexe selon la revendication 11, caractérisé en ce que la couche de film de polymère est revêtue d'au moins une couche de film de résine thermoplastique constituant la couche externe du matériau complexe.

13. Matériau complexe selon l'une des revendications 11 et 12, caractérisé en ce qu'il comprend, entre la couche de métal et la couche de film de polymère, une couche de résine thermodurcissable destinée à améliorer l'accrochage.

14. Procédé d'obtention du matériau complexe selon la revendication 11, caractérisé en ce qu'il consiste à enduire le support métallique au moyen d'au moins une couche de film de polymère à une température comprise entre 140 et 330°C, la vitesse de défilement du support métallique étant comprise entre 1 et 400 mètres par minute.

**Patentansprüche**

1. Polymere mit einem Schmelzindex zwischen 1 und 20 dg/min., die Struktureinheiten (A) von Ethylenderivaten, Struktureinheiten (B) von Derivaten eines Anhydrids einer ethylenisch ungesättigten $\alpha,\beta$-Dicarbonsäure und gegebenenfalls Struktureinheiten (C) von Alkylacrylat- oder Alkylmethacrylatderivaten enthalten, deren Alkylgruppe 1 bis 12 Kohlenstoffatome enthält, dadurch gekennzeichnet, daß die Polymere pro 100 Mol: 83 bis 99,7 Mol der Struktureinheiten (A), 0,29 bis 3 Mol der Struktureinheiten (B), 0 bis 13,6 Mol der Struktureinheiten (C), und außerdem 0,01 bis 0,4 Mol der Struktureinheiten (D) von Derivaten von mindestens einem Poly(meth)acrylat eines Polyols enthalten.

2. Polymere nach Anspruch 1, dadurch gekennzeichnet, daß sie pro 100 Mol: 83 bis 98,7 Mol der Struktureinheiten (A), 0,29 bis 3 Mol der Struktureinheiten (B), 1 bis 13,6 Mol der Struktureinheiten (C) und 0,01 bis 0,4 Mol der Struktureinheiten (D) enthalten.

3. Polymere nach einem der Ansprüche 1 und 2, dadurch gekennzeichnet, daß das Poly(meth)acrylat eines Polyols das Triacrylat von Trimethylolpropan ist.

4. Polymere nach einem der Ansprüche 1 und 2, dadurch gekennzeichnet, daß das Poly(meth)acrylat eines Polyols das Diacrylat von Tripropylenglykol ist.

5. Polymere nach einem der Ansprüche 1 bis 4, dadurch gekennzeichnet, daß ihr Schmelzindex zwischen

EP 0 312 459 B1

1 und 8 dg/min. liegt.

6. Polymere nach einem der Ansprüche 1 bis 5, dadurch gekennzeichnet, daß ihr Polydispersitätsindex zwischen 5 und 12 liegt.

7. Verfahren zur Herstellung eines Polymers nach einem der Ansprüche 1 bis 6 durch Copolymerisation eines Gemischs aus Ethylen, einem Anhydrid einer ethylenisch ungesättigten $\alpha,\beta$-Dicarbonsäure, mindestens einem Poly(meth)acrylat eines Polyols und gegebenenfalls mindestens einem Alkyl(meth)acrylat, bei einer Temperatur zwischen 140° und 280 °C unter einem Druck zwischen 1000 und 2500 bar, in Gegenwart eines Initiators mit freien Radikalen, dadurch gekennzeichnet, daß vor der Copolymerisation das Poly(meth)acrylat eines Polyols in einem Lösungsmittel gelöst wird.

8. Verfahren nach Anspruch 7, dadurch gekennzeichnet, daß das Gemisch im stationären Bereich aus
– 97,8 bis 99,97 % Mol Ethylen,
– 0,029 bis 0,35 % Mol eines Anhydrids einer ungesättigten $\alpha,\beta$-Dicarbonsäure,
– 0 bis 1,8 % Mol Alkyl(meth)acrylat, und
– 0,001 bis 0,05 % Mol Poly(meth)acrylat eines Polyols zusammengesetzt ist.

9. Verfahren nach einem der Ansprüche 7 und 8, bei dem das Copolymere die Struktureinheiten von mindestens einem Alkyl(meth)acrylatderivat enthält, dadurch gekennzeichnet, daß das Poly(meth)acrylat eines Polyols in dem Alkyl(meth)acrylat gelöst ist.

10. Verfahren nach einem der Ansprüche 7 bis 9, dadurch gekennzeichnet, daß das Poly(meth)acrylat eines Polyols und das Anhydrid einer ethylenisch ungesättigten $\alpha,\beta$-Dicarbonsäure in dem selben Lösungsmittel gelöst sind.

11. Mehrschichtiges Material, enthaltend mindestens eine Metallschicht, die mit mindestens einer Schicht einer Polymerfolie von einer Dicke zwischen 5 und 500 µm überzogen ist, dadurch gekennzeichnet, daß das Polymere einem der Ansprüche 1 bis 6 entspricht.

12. Mehrschichtiges Material nach Anspruch 11, dadurch gekennzeichnet, daß die Schicht einer Polymerfolie mit wenigstens einer Schicht einer Folie aus thermoplastischem Harz überzogen ist, die die Außenschicht des mehrschichtigen Materials bildet.

13. Mehrschichtiges Material nach einem der Ansprüche 11 und 12, dadurch gekennzeichnet, daß es zwischen der Metallschicht und der Schicht der Polymerfolie eine Schicht eines wärmehärtbaren Harzes enthält, um die Haftung zu verbessern.

14. Verfahren zur Gewinnung des mehrschichtigen Materials nach Anspruch 11, dadurch gekennzeichnet, daß der metallische Träger mit Hilfe von wenigstens einer Schicht einer Polymerfolie bei einer Temperatur zwischen 140° und 330°C überzogen wird, wobei die Durchlaufgeschwindigkeit des metallischen Trägers zwischen 1 und 400 Metern pro Minute liegt.

## Claims

1. Polymers with a melt index of between 1 and 20 dg/min, comprising units (A) derived from ethylene, units (B) derived from an anhydride of an ethylenically unsaturated $\alpha,\beta$-dicarboxylic acid and, if appropriate, units (C) derived from an alkyl acrylate or methacrylate in which the alkyl group contains from 1 to 12 carbon atoms, characterised in that they comprise, per 100 moles: from 83 to 99.7 moles of units (A), from 0.29 to 3 moles of units (B), from 0 to 13.6 moles of units (C) and additionally from 0.01 to 0.4 moles of units (D) derived from at least one polyol poly(meth)acrylate.

2. Polymers according to Claim 1, characterised in that they comprise, per 100 moles: from 83 to 98.7 moles of units (A), from 0.29 to 3 moles of units (B), from 1 to 13.6 moles of units (C) and from 0.01 to 0.4 moles of units (D).

3. Polymers according to either of Claims 1 and 2, characterised in that the polyol poly(meth)acrylate is trimethylolpropane triacrylate.

4. Polymers according to either of Claims 1 and 2, characterised in that the polyol poly(meth)acrylate is tripropylene glycol diacrylate.

5. Polymers according to one of Claims 1 to 4, characterised in that their melt index is between 1 and 8 dg/min.

6. Polymers according to one of Claims 1 to 5, characterised in that their polydispersity index is between 5 and 12.

7. Process for the preparation of a polymer in accordance with any one of Claims 1 to 6, by copolymerisation of a mixture of ethylene, of an anhydride of an ethylenically unsaturated $\alpha,\beta$-dicarboxylic acid, of at least one polyol poly(meth)acrylate and, if appropriate, of at least one alkyl (meth)acrylate, at a temperature of between 140 and 280°C, at a pressure of between 1000 and 2500 bars, in the presence of at least one free-radical initiator, characterised in that, before the copolymerisation, the polyol poly(meth)acrylate is dissolved in a solvent.

8. Process according to Claim 7, operated continuously, characterised in that the mixture is made up, in a stationary state, of:

– 97.8 to 99.97 mol% of ethylene,

– 0.029 to 0.35 mol% of an anhydride of an unsaturated $\alpha,\beta$-dicarboxylic acid,

– 0 to 1.8 mol% of alkyl (meth)acrylate, and

– 0.001 to 0.05 mol% of polyol poly(meth)acrylate.

9. Process according to either of Claims 7 and 8, the copolymer containing units derived from at least one alkyl (meth)acrylate, characterised in that the polyol poly(meth)acrylate is dissolved in the said alkyl (meth)acrylate.

10. Process according to one of Claims 7 to 9, characterised in that the polyol poly(meth)acrylate and the anhydride of an ethylenically unsaturated $\alpha,\beta$-dicarboxylic acid are dissolved in the same solvent.

11. Composite material comprising at least one layer of metal coated with at least one layer of polymer film with a thickness of between 5 and 500 $\mu$m, characterised in that the polymer is in accordance with one of Claims 1 to 6.

12. Composite material according to Claim 11, characterised in that the layer of polymer film is coated with at least one layer of thermoplastic resin film constituting the outer layer of the composite material.

13. Composite material according to either of Claims 11 and 12, characterised in that, between the metal layer and the polymer film layer, it comprises a thermosetting resin layer intended to improve the bonding.

14. Process for obtaining the composite material according to Claim 11, characterised in that it consists in coating the metal support with at least one layer of polymer film at a temperature of between 140 and 330°C, the speed of travel of the metal support being between 1 and 400 metres per minute.